# EUROPEAN PATENT SPECIFICATION

(11) **EP 1 893 887 B1**
(45) Date of publication and mention of the grant of the patent: **28.11.2018**
(21) Application number: 06747894.1
(22) Date of filing: 14.06.2006
(51) Int. Cl.: F16F 9/34, F16F 9/46, F16F 9/508

(54) **ARRANGEMENT, DEVICE AND METHOD AT A DISTURBANCE -ELIMINATING VALVE FOR DAMPER**
ANORDNUNG, VORRICHTUNG UND VERFAHREN AN EINEM STÖRUNGSBESEITIGUNGSVENTIL FÜR EINEN DÄMPFER
CONFIGURATION, DISPOSITIF ET PROCÉDÉ POUR VALVE DE SUPPRESSION DES INTERFÉRENCES POUR AMORTISSEUR

(30) Priority: 14.06.2005 SE 0501345
(43) Date of publication of application: 05.03.2008
(73) Proprietor: ÖHLINS RACING AB, 194 27 Upplands Väsby (SE)
(72) Inventor: SÖNSTERÖD, Lars, 518 33 Sandared (SE)
(74) Representative: AWA Sweden AB
(86) International application number: PCT/SE2006/000701
(87) International publication number: WO 2006/135319

(56) References cited:
- EP-A1- 0 608 427
- EP-A2- 0 504 624
- SE-C2- 526 397
- US-A- 5 927 449
- US-A1- 2003 106 753

## Description

The present invention relates, among other things, to an arrangement with disturbance elimination for electronically-controlled shock absorbers for vehicles, for example shock absorbers, steering dampers, etc. The electronic control can be carried out by computer or actuator for so-called EC-function. The vehicles can be wheeled vehicles with two, three, four or more wheels. The invention can also be used for snow-scooters with runners, tracks, etc. The arrangement can have, among other things, control equipment that comprises movement-detecting sensors that detect the movements of wheels, runners, tracks, etc, and that send control signals to one or more dampers comprised in the arrangement in response to these movements. Each damper comprises a cylinder and a piston or piston device arranged inside this, which piston or piston device operates in a medium utilized by the damper (for example hydraulic oil with any additives) and divides the inner chamber of the cylinder into a first and second chamber compartment. The damper also comprises or interacts with one or more valves in the form of pilot valves or partial step valves that control the pressure of the medium in the chamber compartments and hence the damping carried out by the respective damper, for example in both directions, by means of the said control signals. Each valve comprises, in addition, at least one electrical coil that is connected or that can be connected to the control signals, and a part controlled by the coil when control signals are received, which part is able to move and preferably works with short strokes. By means of its movements, this part in turn affects a first piston that moves in a first space in, for example, a valve housing, against the action of a spring, which first piston divides the first space into a first and a second partial space. In a first functional state, the first piston assumes a longitudinally displaced position that causes a first flow of medium to pass from the damper's first chamber compartment, via the partial space below the first piston and on through a first side opening (port) arranged in the inner wall of the housing, to a first duct connected to the second chamber compartment. In a second functional state, the first piston assumes a longitudinally displaced position where a second flow of medium, unaffected by the first piston, passes from the first partial space to a second side opening (port) that is preferably to be found in the same housing and on to the second chamber compartment via a second duct and a non-return element arranged in this. When the second functional state is assumed, the first piston is arranged to be caused to move, by means of guide faces arranged on the valve piston and by guide faces in the housing that correspond to these, to a position in front of the first side opening where the first flow of medium is reduced and the second flow of medium is initiated due to an increase in pressure in the said partial space caused by the reduction in the first flow of medium and hence opening of the said element. In addition, the first piston assumes the position in front of the first side opening by means of the said spring and a reduction in pressure at the first side opening caused by the piston assuming the position alongside the first side opening. The first piston is arranged with passages between the partial spaces and there is thereby axial pressure relief in both the functional states.

The invention also relates to a device for dampers for vehicles and comprises or interacts with disturbance-eliminating valves in the form of partial step valves or pilot valves. The damper comprises a piston arranged in such a way that it can move in a cylinder or a blade that can rotate in a cylinder, which piston or blade divides the inner space in the cylinder, the valve housing, etc, into a first and a second chamber, with the chambers being connected together by one or more ducts via the said valve that has a valve slide and a valve piston arranged on this that can move in spaces arranged in the valve housing. The movements of the valve slide can be determined by a force that can be completely or partially initiated from an external actuator or a computer, for example a microcomputer. The movements can also be determined by a force that is determined by pressure acting upon the areas of the valve piston that can be affected by the said flow of the working medium between the first and second chambers and by a spring or spring function.

The invention also relates to a device for disturbance-eliminating valves in the form of partial step valves or pilot valves that comprise a valve slide that can move in a space in the medium, which valve slide is arranged to have an effect on a passage for the medium through the valve by means of guides that exert a pressure force on the slide and a pilot spring force, called a first force, in the opposite direction to an actuating force, called a second force, applied on the valve slide, whereby the body divides the space into a damping chamber and a pilot pressure chamber by means of a part.

The invention also relates to a method for eliminating disturbances caused by the admixture of gas in a damping medium in a partial step valve or pilot valve arranged in a vehicle.

The technology that has been used to date within the field is described in, for example, S9800775-0, S0400012-1, EP504624-A2 and EP400395-B1. The valves in question are described in these documents as pilot-controlled, with the damping of the pilot cone not being described in certain cases, but with the solenoid's armature being damped in its cylinder. In other cases, as in EP400395, the damping is described as a throttling between two chambers. Among other things, it is common to the known technical solutions that the damping arrangement is located on the low pressure side, that is downstream of the valve function that is to be damped.

EP 0 504 624 A2 is considered to form the closest prior art for the subject-matter of claim 1 and discloses an arrangement with disturbance elimination for dampers for vehicles, which dampers are controlled electronically, for example controlled by computer or EC-controlled, with control equipment that comprises movement-detecting sensors and in response to these initiates control signals to one or more dampers, each damper comprising a cylinder and a piston arranged in this that works in a medium utilized by the damper and that divides the inner chamber of the cylinder into a first and second chamber compartment, which arrangement comprises one or more valves in the form of pilot valves or partial step valves that control the pressure of the medium in the chamber compartments and hence the damping carried out by the damper, for example in both directions, by means of the said control signals, with each valve comprising at least one electrical coil that is connected or that can be connected to the control signals, and a part controlled by the coil when control signals are received, which part is able to move and preferably works with short strokes, and that in turn, by means of its movements, affects a first piston that moves in a first space in a valve housing, against the action of a spring, which first piston divides the first space into first and second partial spaces and the first piston is arranged with passages between the partial spaces and there is thereby axial pressure relief, wherein he first piston is located on a valve slide that can move in a longitudinal direction and that extends into the said partial spaces and into a second partial space in the housing that is connected to the said partial spaces.

EP 0 504 624 A2 also discloses a device for a damper for vehicles according to the preamble of claim 8 and a method for eliminating disturbances caused by the admixture of gas in a damping medium in a partial step valve or pilot valve arranged in a vehicle according to the preamble of claim 16.

The problem with the said valves is that their damping is based on the sum of hydraulic damping in the solenoid or in its vicinity, and friction. The shock absorbers or steering dampers, etc, that are used within the car industry do not usually have so-called gas-separating pistons, for which reason the hydraulic fluid becomes saturated with gas. After hard driving with such dampers, gas collects in pockets and closed spaces and the volume of gas increases the lower the pressure. This means that the damping that relates to valve functions on the low pressure side can be lost under the said circumstances. Remaining friction is insufficient to damp the valve function, which can cause oscillations with frequencies within the range 400-1500 Hz. This sound is particularly irritating to the human ear and is not acceptable to car users and car manufacturers. Increased friction has been tested and has been found not to solve the problem in a correct way. The invention is intended to solve this problem, among others.

There is also a desire for the valve in question, for example a proportional valve, to be able to be incorporated in a main valve in an integrated and space-saving way. The invention also solves this problem.

The valve described above is able to operate silently and is completely unaffected by gas that is saturated in the oil in shock absorbers. In addition, the main stage of the valve can be provided with a double spring function that makes it possible to carry out very accurately set and low preloading with small variations in spite of the selection of a stiff spring constant. The whole valve can be assembled in sequence from one direction. In accordance with the invention, in the case with two functional states, the transitions between the different states must be able to take place without any specific actions or resetting having to be carried out, for example without the vehicle having to be stopped in order to carry out the transition. The arrangement and the device according to the invention can work with or can comprise dampers that are arranged with damping function in one or both directions. The dampers can consist of shock absorbers or steering dampers for vehicles between parts of the vehicle that can move in relation to each other.

The principal characteristic of an arrangement according to the invention is, among other things, that the first piston is located on a valve slide that can move in a longitudinal direction and that extends into the said partial space and into a second partial space in the housing that is connected to the said partial space. In addition, a control edge for the valve slide is located at the transition to the second partial space, while at the same time the part of the slide that extends into the additional space has an extension part upstream of the control edge with a second piston arranged on this that divides the second partial space into third and fourth partial spaces. These partial spaces divide up the area of action of the slide into a first part in association with the said seat or control edge and a second part on the underside of the second piston. In addition, the invention is characterized in that the second piston and an opposing inner guide face in the second partial space are arranged with a clearance between them that effects the elimination of disturbance by ensuring that the pressure differences that arise in the partial space in question (the cavity) at the second piston as a result of the speed of movement of the slide affect the second part of the area of action of the slide with a force that counteracts the movement.

It is typical of the invention that the disturbance elimination also works when the partial space is filled with gas, due to the fact that, as early as during the pressure-increasing phase or pressure-reducing phase, a force arises that prevents movement, as the gas inside the partial space must first be compressed before movement of the slide can take place.

The valve thus works with damping on the high pressure side, that is upstream, which helps to solve the said problem.

Further developments of the concept of the invention are apparent from the subsidiary claims below that are associated with the arrangement.

The principal characteristic of a device according to the invention is, among other things that, at the high pressure side, that is upstream of the valve piston that was described in the introduction, there is a damping device that damps the movements of the valve piston irrespective of the state of the working medium, that is irrespective of the gas content in the medium.

Further developments of this concept of the invention are apparent from the subsidiary claims relating to the device in question.

The device according to the invention can also be said to be characterized in that, in a stationary control position of the body, the pressure in the damping chamber is arranged to assume a value that essentially corresponds to a pressure value in the pilot pressure chamber, in that, in the event of an urged movement from the stationary control position, the body is arranged to bring about a pressure difference at the said part and in that, in the event of the said movement, the pressure in the damping chamber undergoes a change in value that is essentially proportional to the speed of movement of the body and generates a damping force that coincides with the control force and that counteracts the movement of the body and thereby brings about the disturbance elimination, that can consist of preventing any admixture of gas in the medium affecting damping caused by the valve or preventing unwanted noises arising due to the admixture of gas.

Depending upon which part of the damping process is being described, it is also possible to characterize the invention in that the damping force coinciding with the control force arises as soon as it is the case that the damping chamber is filled with gas in a pressure-increasing or pressure-reducing procedure for the reason that, on account of its compressibility, the gas in question cannot have a pressure-increasing or pressure-reducing effect on the area of action of the slide that is in the damping chamber.

By means of what is proposed in the above, a control function with control edge/seat/etc and piston/part/membrane/etc can be arranged on or in association with the slide or corresponding moving device. The function of the spring 6 can alternatively be provided by other devices that have a spring function. By stiff spring constant is meant values between 40-500 N/mm. The abovementioned problems are solved by the creation of a damping force that constitutes part of the first force and, at the same time, is on the high pressure side, upstream of the control edge, seat, etc.

The method according to the invention means that, in a first activated functional state, a second piston, arranged on the high pressure side or upstream of a valve piston that moves in the damping medium, is inserted into a space in a cylinder and divides this cylinder into an additional damping chamber, while at the same time it causes a change in pressure in the additional damping chamber. In a second functional state, called the inactivated or defective state, the damping medium flows more freely over the second piston and equalizes the pressure across the piston. The change in pressure thus generates an additional damping force that counteracts the movement of the valve slide irrespective of the admixture of gas in the damping medium in the first functional state but, however, not as much as in the second functional state.

Further developments of this concept of the invention are described in the subsidiary claims for the method in question.

A currently proposed arrangement, device and method for an embodiment of the invention will be described below with reference to the attached drawings, in which
Figure 1 shows in outline a vertical section of an arrangement with a damped proportional valve with two functional states arranged to interact with a shock absorber for a vehicle in the form of a car, with the valve assuming an activated first functional state,
Figure 1a shows in outline and in horizontal section a blade damper that can be connected to the arrangement according to Figure 1,
Figure 2 shows in vertical section the valve according to Figure 1 in a second inactivated functional state,
Figure 3 shows in horizontal view the position function for the valve piston alongside a first side opening for a first flow of medium in the arrangement according to Figures 1-2,
Figure 4 shows in vertical section an embodiment of the valve with slots in the first functional state,
Figure 5 shows in vertical section an embodiment of the valve with slots in the second functional state,
Figure 6 shows in vertical section an embodiment of the valve with holes in the second functional state,
Figure 6a horizontal section that defines the area A3
Figure 6b vertical section that defines the area A2
Figure 7 shows in horizontal section an embodiment of the valve with slots in the second functional state,
Figure 8 shows in vertical section how the pilot valve is integrated with the main valve in a dual spring configuration with spring holder,
Figure 9 shows in vertical section how the pilot valve is integrated with the main valve in a dual spring configuration with shim spring, and
Figures 10-12 show in vertical section a number of simplified variants of pilot valves with only one functional state.

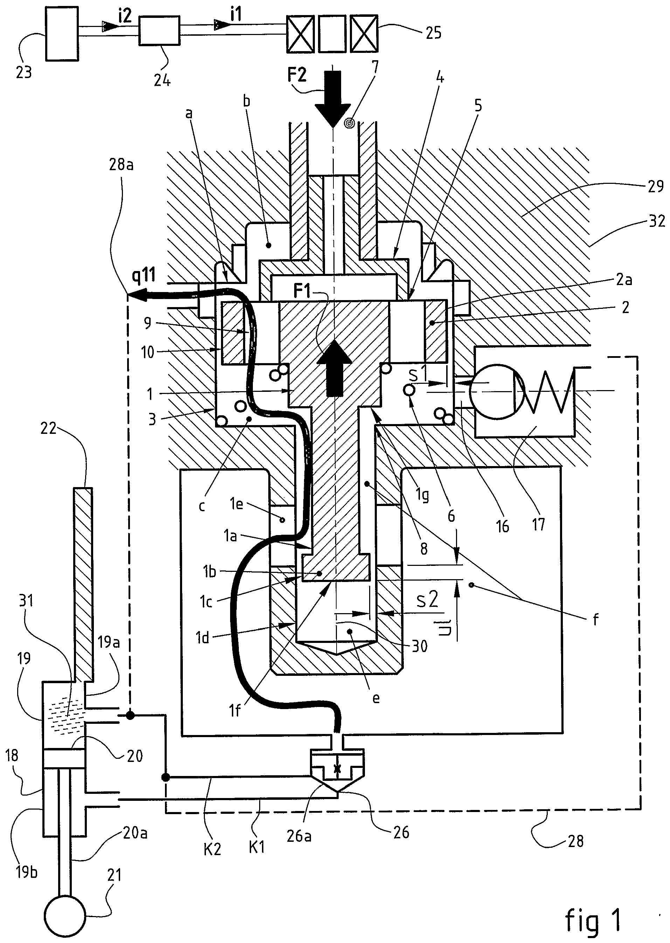

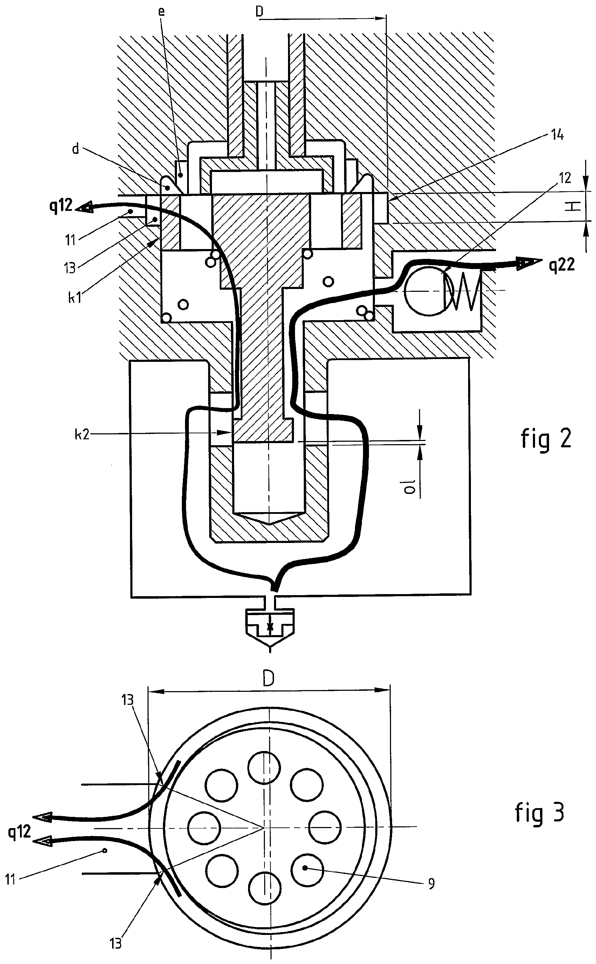

Figure 1 shows the arrangement/valve with activated valve actuator and Figure 2 shows the arrangement/valve in activated state. The valve piston 1 is on the part that faces towards the actuator provided with a disk-shaped first piston 2, which is guided against the inner wall 3 of the pilot housing and makes contact with the actuator pin 4 in the plane 5 in an axial direction perpendicular to the direction of movement. The valve piston 1 of the pilot function is acted upon from one direction by a first force F1 from a spring 6 or a device exerting a spring function and the forces that result from the pressure in the chambers e and f and from a second direction by a second force F2 from the actuator 7 in the activated state. The pilot cone is normally located several hundredths from the control edge 8. In its extension, the valve piston 1 is provided with an extension part 1a and a second piston 1b, the guide face 1c of which has a clearance s2 to a cylinder 1d that interacts with the control edge 8. The cylinder is provided with a communicating gap s2 and divides the function into an additional two chambers: a damping chamber e and a pilot pressure chamber f. When the valve piston is in the controlling position and is stationary, the pressure in the damping chamber is the same as in the pilot pressure chamber, whereby the first force F1 is created as the sum of the effect of the pilot pressure on the areas (If 1g). In the position to which the valve piston is forced by a movement or increase/reduction in pressure, the pressure in the damping chamber e is changed, however, almost or essentially in proportion to the speed of movement or increase/reduction in pressure of the pilot cone and thereby creates a damping force that always works against the direction of movement, that is counteracts the movement, in other words a damping or damping function is obtained. If there is gas in the damping chamber e, this makes no difference, as the said damping force is a part of the first force F1 and is located on the high pressure side, upstream of the control edge 8. The clearance s2 must be arranged with a narrow range and with a size that is in proportion to the selected diameter of the second piston 1b, for example from s=0.03 mm to s=0.05 mm for a piston diameter of 2.8 mm. That is, the ratio between size of clearance and piston diameter can be calculated as the quotient between s and dₖ and the ratio can thus vary between 0.010 and 0.018.

In the second functional state, that is here called the inactivated state or defective state, according to Figure 2, the force of the spring 6 urges the pilot cone towards its opposite end position determined by the surface a. A number of holes 9 pass through the first piston 2 that provide communication between both sides of the first piston, space b and space c, which gives a total axial pressure relief on the pilot cone 1 in all positions and load conditions. In order to create additional control and pressure relief towards the surface a, in an embodiment, this can be provided with a surrounding chamber that has a number of holes or slots g that provide communication between the chamber b and the chamber towards the surface a, which additionally contributes to the said pressure relief also in the case when the disk rests against the surface a. At the same moment as the actuator of the valve piston 1 is deactivated, the first piston 2 moves towards its end position, defined by the surface a, and already before it has reached this position, the peripheral guide face 10 of its disk starts to close the radially-located port 11 with its flow q11 when the actuator is activated. A smooth transition to the second functional state is carried out towards a connection of a permanently set non-return element 12. The transition is smooth as a result of the gradually reduced flow q11 to q12 in the utilized side opening or the throttle 13 with its final partial flow q12 in parallel with the second flow q22, a transition that is free of transients. The throttle is, for example, designed as a circular groove 14 into which the port 11 opens out. The return function from the second to the first functional state takes place in a corresponding way, by a gradually reducing flow q22 to a gradually increasing flow q12, meaning that no special resetting function is required. In Figure 1, a space in the valve housing is indicated by 15. The said space is filled with the medium.

An advantage is thus obtained as far as production technology is concerned, as the burring operation on the sensitive guide face is not required and due to the fact that no burrs interfere with the control of the slide disk. The diameter D and the height H of the groove determine the size of the throttle and hence of the partial flow q12. This should preferably be precise and should be able to be repeated. The contact between the plane 5 and the plane a enables, however, the disk 2 to move radially, which it does when the safety function or the second functional state is applied, due to the fact that the disk is forced radially towards its closed position during its movement towards the outlet port 11 within the framework of the clearances S1 and S2. In accordance with the above, the radial movement is extremely small or equal to the gap in question. Figure 1 also shows a second side opening 16 to a duct or space 17 provided with the non-return element 12. The ducts 11 and 17 each lead to a chamber compartment in a shock absorber 18 with cylinder 19 and piston 20. The chamber compartments above and below the piston 20 have the reference numerals 19a and 19b. The shock absorber can be arranged for a vehicle wheel 21, for example via a piston rod 20a. The cylinder 19 is connected to the chassis 22 of the vehicle. One or more sensors 23 are arranged on the wheel to detect and indicate the movements of the wheel relative to the chassis. A computer device 24 or computer function detects the sensor or sensors from one or more shock absorbers. The equipment sends control signals i1 to one or more coils on one or more solenoids or corresponding electronic units. The control signals bring about the forces F2 on the actuator pin or control device 4 of the solenoid part and hence the valve piston 1 in the valve. The detection signals from the sensor are given the reference numeral i2. The duct between the outlet of the valve 26a and the chamber compartment 19 is indicated by K2 and the duct between the space 17 and the first chamber compartment is shown by a broken line 28. The first piston 2 and the valve piston 1 assume the position shown in Figures 2 and 3 by means of the spring 6 and a reduction in pressure 27 that occurs across the opening 11, 13 when the second functional state is assumed in the event of the complete or partial cessation or loss of the signals.

The said reduction in pressure 27 creates flow conditions that attempt to pull the first piston in a radial direction towards the opening 11, 13 according to Figure 2. It has been found that the position can be repeated and that the piston assumes precisely or essentially the same position upon each assumption of the second functional state. This is possible without inclining the disk-shaped first piston 2 if the clearances s1 and s2 are made as equal to each other as possible or essentially the same size. The present construction differs from patent S0400012-1 in that the parts comprised in the pilot slide are guided at the points k1 and k2 that are located a relatively large distance apart, for example approximately 8 mm, and in that the clearance between the first piston 2 and the inner wall 3 of the housing is made significantly smaller on account of said requirements concerning s1 and s2. The damping that is achieved by means of the piston 1b can be caused to cease, as it is not needed in the said second functional state, by a selection of a small value, for example approximately 0.1 mm, for the underlap/overlap ul in this position according to Figure 2. Figure 1 shows how the damping is activated by means of a relatively large value, for example approximately 1 mm, for the overlap ol.

Figure 3 shows that the area in the throttle 13 is A1 = H*(Ds/2-Dd/2)*2 where Ds = the diameter of the circular groove 14, H = the height of the circular groove and Ds = the diameter of the first piston 2. Ds, Dd and H are preferably selected around 9.8, 10.1 and 0.6 mm. The valve piston 1 according to the above is preferably constructed so that the surfaces 5, 8 and a are flat and perpendicular (radially directed) to the direction of movement (axially directed). The first piston 2 can always assume an unambiguous, well-defined and particular position on account of the clearance s2 that should preferably be the same size as the clearance s1 in order to allow a narrow range of the partial flow q12, which thereby constitutes an accurately determined leakage flow determined by, for example, the diameter Ds.

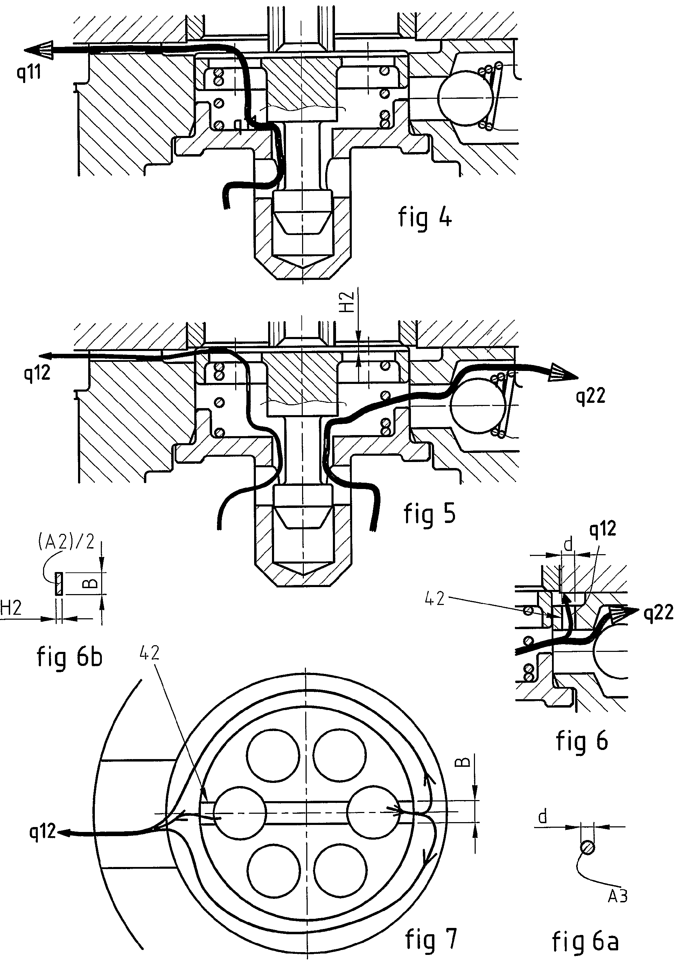

In the second functional state, according to Figures 5 and 6b, the partial flow q12 can also be accurately determined by the breadth B and height H2 of the groove 42 by means of the area A2=H2*B*2 or, as in Figures 6 and 6b, by means of only the hole 43 with the hole area A3=π/4*d^2. In both these cases, Ds is so large that no reduction in pressure arises in this zone. The measurements Ds, B and H are preferably selected around 12.8, 0.2 and 0.5 mm respectively.

The first functional state is shown in Figure 4, showing the normal functional principle with its first flow q11.

Figures 5, 6 and 7 show the second functional state, showing the functional principle with a first partial flow q12 and a second partial flow q22.

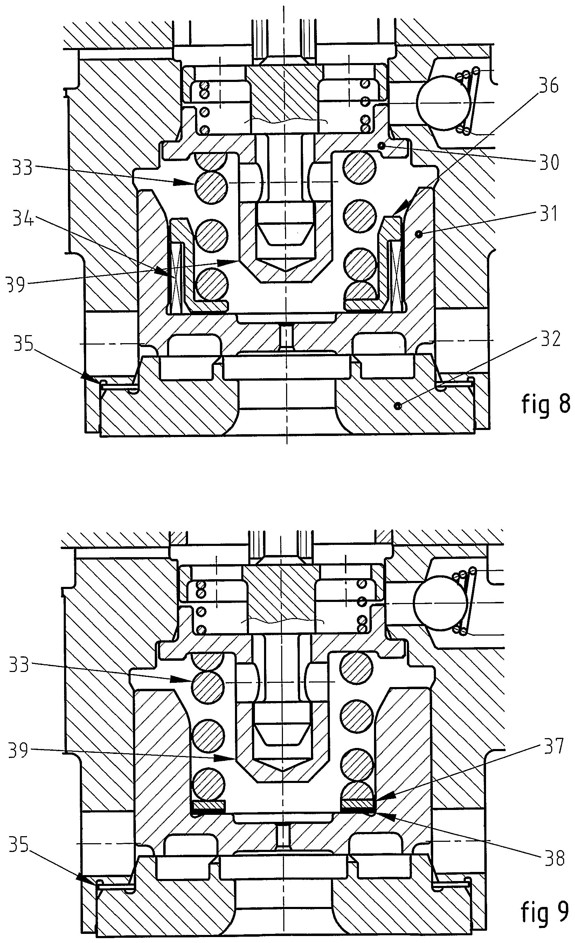

Figure 8 shows a unit as far as production technology is concerned, with the valve in its entirety, which unit can be assembled from one direction, due to the fact that the pilot housing 30 constitutes a separate component that can be assembled from the same direction as a main cone 31 and a main seat 32. An innovation as far as functional technology is concerned is that the main cone of the valve has been provided with two springs connected in series, "dual springs", one stiff spring 33 and one weak spring 34 adjusted so that the pre-stressing of the main cone is low and precisely determined by the weak spring, preferably selected around F=0.5±0.4 N. The required stiffness is in a range between K1=40-500 N/mm for the main function that is determined by the stiff spring. The weak spring, with spring constant preferably around K2=1 N/mm, is preferably selected to work with an extremely short stroke, preferably around x=0.035 mm with small permitted variation +0.03 mm, which in turn is achieved by a suitable choice of shims 35. In the case shown, the springs are guided and held by a spring holder 36.

Figure 9 shows the described function implemented by means of a flat thin spacer 37 with a thickness t of preferably approximately 0.4 mm and a thin shim spring 38 with a thickness t of preferably approximately 0.1 mm. This construction is only one example, and the components 37 and 38 can, of course, be designed as a single shim spring connected in series with the main spring.

Both Figure 8 and Figure 9 show that the pilot function 39 has an integrated position inside the main spring 33 in the center, which means that the total valve concept can be made compact.

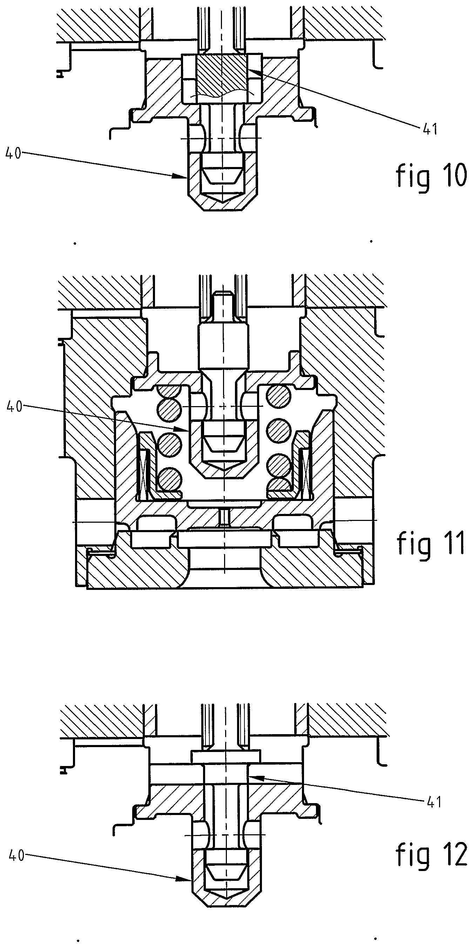

Figures 10, 11 and 12 show three embodiments of the pilot valve 40 that is described above, utilizing a valve piston 1 without safety function 41. Simplified embodiments are possible, and accordingly the safety function can be removed in the described pilot valve design.

In Figure 1a, the damper, for example the shock absorber, with cylinder and piston, has been replaced by a damper, for example a steering damper, in the form of a blade damper with housing 43 and blade 44. The housing is designed with ducts 45 that make it possible to connect the connections 26', 28' and 28a' to the first and second chamber compartments 46, 47 of the damper.

The invention also relates to a method for eliminating disturbances caused by the admixture of gas in a damping medium in a partial step valve or pilot valve arranged in a vehicle, where the valve comprises a valve slide that can move in a space (b, c, f) in the medium, arranged in ducts (K1, K2) between a first (19a) and a second (19b) chamber filled with damping medium and constructed of a valve piston (1), an extension part (1a), a second piston (1b) and a first piston (2). The method according to the invention means that, in a first activated functional state, the second piston (1b) that is arranged on the high pressure side or upstream of the valve piston (1) is inserted into a space in a cylinder (1d) and divides this cylinder (1d) into an additional damping chamber (e), while at the same time it causes a change in pressure in the additional damping chamber (e). In a second functional state, called the inactivated or defective state, the damping medium flows more freely over the second piston (1b) and equalizes the pressure across the piston (1b).

The method thus affects the flow of working medium over the second piston (1b) and brings about an additional damping force applied on the slide which coincides with a first force (F1) determined by pressure acting on areas (1f, 1g) of the valve piston (1) arranged on the valve slide. The first force (F1) is opposed to a second force (F2) which can be completely or partially initiated by an external controllable actuator (7) or a computer function. The extension part (1a) and the second piston (1b) work in a fourth partial space (f), on the high pressure side, that is upstream, of the valve piston (1) so that the second piston (1b) divides the cylinder (1d) into the damping chamber (e) that is separated from the fourth partial space (f).

In its first functional state, the second piston (1b) is also arranged with a clearance (s2) and an overlap (ol) in the cylinder (1d) so that, in a stationary control position for the valve slide, the damping medium is allowed to flow via the overlap (ol) through this clearance (s2) in such a way that the pressure in the damping chamber (e) assumes a value that essentially corresponds to a pressure value in the fourth partial space (f). The size of the clearance (s2) in relation to the diameter of the second piston (1b) is selected in such a way that, in the event of an urged movement of the valve slide from the stationary control position, the pressure in the damping chamber (e) undergoes a value change that is essentially proportional to the speed of movement of the valve slide and generates the damping force coinciding with the first force (F1) that counteracts the movement of the valve slide and thereby brings about the disturbance elimination.

### Names of components:

- 1: Valve piston, valve body, cone, pilot cone
- 1a: Extension part, pin
- 1b: Second piston, piston
- 1c: Guide face
- 1d: Cylinder
- 1e: Openings
- 1f: Area, second partial area
- 1g: Area, first partial area
- 2: First piston, valve slide
- 3: Inner wall
- 4: Actuator pin, (the actuator's pin, pin)
- 5: Plane
- 6: Spring, pilot spring
- 7: Actuator
- 8: Control edge, seat, pilot seat
- 9: Hole, passage
- 10: Guide face, (peripheral part of the disk)
- 11: Port, duct, opening
- 12: Non-return element, element, body
- 13: Opening, side opening, throttle
- 14: Circular groove
- 15: Space in the valve housing
- 16: Second side opening
- 17: Second duct, duct, space
- 18: Shock absorber
- 19: Cylinder, chamber compartment
- 19a: First chamber, chamber compartment
- 19b: Second chamber, chamber compartment
- 20: Piston
- 21: Vehicle wheel
- 22: Chassis
- 23: Sensor
- 24: Control equipment, computer equipment
- 25: Electrical coil
- 26: Inlet, inlet of the main valve
- 26a: Main valve
- 26b: Pilot valve
- 27: Reduction in pressure
- 28: Duct
- 29: Housing
- 30: Pilot housing
- 31: Main cone
- 32: Main seat
- 33: Main spring, stiff spring
- 34: Weak spring, spring
- 35: Shim, thin spacer
- 36: Spring holder
- 37: Thin spacer
- 38: Pilot function, pilot valve
- 39: Pilot valve
- 40: Piston without safety function
- 41: Hole, slot
- 43.: Blade damper housing
- 44.: Blade
- 45.: Duct
- 46.: First chamber compartment
- 47.: Second chamber compartment

### Other names of components and other terms in the text

- a: contact surface
- b: second partial space
- c: first partial space
- d: opening
- e: third partial space, damping chamber
- f: fourth partial space, pilot pressure chamber
- g: slot
- K1: Duct
- K2: Duct
- k1: contact surface
- k2: contact surface
- q11: first flow
- q12: partial flow, leakage flow, reduced flow
- q22: second flow
- i1: control signal, control current
- i2: signal from sensor
- F1: first force, operating force
- F2: second force, actuating force
- ul: underlap
- ol: overlap
- s1: first clearance
- s2: second clearance
- A1: first leakage area
- A2: second leakage area
- A3: third leakage area
- H: height
- B: breadth
- D: diameter
- d: diameter

The combined part consisting of a valve piston (1), an extension part (1a), a second piston (1b) and a first piston (2) is called the valve slide.

The pilot pressure acts on the regulator area of the said valve slide, which regulator area is divided into two areas (If, 1g) that have been called the areas of action of the slide.

The invention is not limited to the embodiments described above, but can be modified within the framework of the following patent claims.

## Claims

1. An arrangement with disturbance elimination for dampers for vehicles, which dampers are controlled electronically, for example controlled by computer or EC-controlled, with control equipment (24) that comprises movement-detecting sensors and in response to these initiates control signals (il) to one or more dampers, each damper comprising a cylinder (19) and a piston (20) arranged in this that works in a medium (31) utilized by the damper and that divides the inner chamber of the cylinder into a first and second chamber compartment (19a, 19b), which arrangement comprises one or more valves (26b) in the form of pilot valves or partial step valves that control the pressure of the medium in the chamber compartments and hence the damping carried out by the damper, for example in both directions, by means of the said control signals, with each valve comprising at least one electrical coil (25) that is connected or that can be connected to the control signals, and a part controlled by the coil when control signals are received, which part is able to move (4) and preferably works with short strokes, and that in turn, by means of its movements, affects a first piston (2) that moves in a first space in a valve housing, against the action of a spring (6), which first piston (2) divides the first space into first and second partial spaces (c, b) and, in a first functional state, assumes longitudinally displaced positions that cause a first flow of medium (q11) to pass from the damper's first chamber compartment, via the partial space (c) below the first piston (2) and on through a first side opening (11, 13) arranged in the inner wall (3) of the housing, to a first duct (11) connected to the second chamber compartment and, in a second functional state, assumes a longitudinally displaced position where a second flow of medium (q22), unaffected by the first piston, passes from the first partial space (c) to a second side opening (16), that is arranged in the housing (29) and that is preferably opposite to the first side opening (13) in the housing, and on to the second chamber compartment (19b) via a second duct (17) and a non-return element (12) arranged in this, in addition to which, when the second functional state is assumed, the first piston is arranged to be caused to move, by means of guide faces (10) arranged on the first piston (2) and the inner wall (3) in the housing corresponding to these, to a position in front of the first side opening (13) where the first flow of medium (q11) is reduced and the second flow of medium (q22) is initiated due to an increase in pressure in the said partial spaces (c, b) caused by a reduction in the first flow of medium and hence opening of the element (12), and where the first piston assumes the position in front of the first side opening by means of the said spring and a reduction in pressure at the first side opening caused by the piston assuming the position alongside the first side opening, and the first piston (2) is arranged with passages (9) between the partial spaces (c, b) and there is thereby axial pressure relief in both the said functional states, wherein the first piston (2) is located on a valve slide (2, 1, 1a, 1b) that can move in a longitudinal direction and that extends into the said partial spaces and into a second partial space in the housing that is connected to the said partial spaces (b, c), wherein a control edge (8) for the valve slide (2, 1, 1a, 1b) is located at the transition to the second partial space, in that the valve slide (2, 1, 1a, 1b) has an extension part (1a) located upstream of the control edge on its part that extends into the additional space and has a second piston (1b) arranged on this that divides the second partial space into third and fourth partial spaces (e and f) that divide up the area of action of the slide into a first partial area (lg) in association with the said control edge and a second partial area (1f) on the under surface of the second piston, and in that the second piston is designed with a peripheral guide face (1c) that opposes the cylinder wall (1d) in the second via a clearance (s2), and in that this clearance is arranged to effect the disturbance elimination by bringing about changes in the pressure that arises in the partial space (e) associated with the second piston as a result of the speed of movement or increase/reduction in pressure on/over the slide by means of the second partial area (1f) of the area of action of the slide affecting the force (F1) in a direction that counteracts the movement.

2. The arrangement as claimed in claim 1, **characterized in that** the slide is arranged to carry out essentially longitudinal displacement movements and small radial clearances (s1 and s2) of preferably essentially the same size.

3. The arrangement as claimed in claim 1 or 2, **characterized in that** the said force brings about a damping function and essentially prevents any admixture of gas in the medium from affecting the damping.

4. The arrangement as claimed in claim 1, 2 or 3, **characterized in that** there Is reduction of noise from the shock absorbers due to the fact that any admixture of gas in the medium is prevented from affecting the damping.

5. The arrangement as claimed in any one of claims 1-4, **characterized in that** the reduced second flow (q12) is arranged to be able to be calibrated, in the second functional state, in holes (42), slots or passages.

6. The arrangement as claimed in any one of claims 1-5, **characterized in that** the housing/pilot valve (26a, 29, 39, 40) has openings (1e) via which the first and second flows are able to pass, **in that**, in the first functional state, the second piston (1b) is positioned in such a way in relation to the openings that an overlap (ol) that is created is sufficiently large to bring about damping, while, in the second functional state, the overlap has a value or has changed to an underlap (ul) or a smaller overlap (ol) of such a size that the damping is inactive or is greatly reduced, in order to make possible rapid changes or transitions between the two functional states.

7. The arrangement as claimed in any one of claims 1-6, **characterized in that** it comprises a pilot valve (30, 39) incorporated in a main valve that means that a large part of its function (30) takes place inside the construction of the main valve, for example inside its main spring (33), whereby a compact design is obtained.

8. A device for a damper for vehicles where the damper has a piston device (20), rotating blade device, that can move in a cylinder (19) or in a housing, which piston device (20), rotating blade device, divides the inner space in the cylinder, housing, into first and second chambers (19a, 19b) interconnected by one or more ducts (K1, K2), with the device comprising a disturbance- eliminating valve (26b) in the form of a partial step valve or pilot valve, arranged in the ducts (K1, K2), where the valve (26b) comprises a valve slide consisting of a valve piston (1), an extension part (1a), a second piston (1b) and a first piston (2), with the first piston (2) being arranged on the valve piston (1) and being able to move in first and second partial spaces (c, b) arranged in the housing (29) of the valve, with the displacement movements of the first piston (2) being able to be determined by a second force (F2) that can be initiated completely or partially by an external controllable actuator (7) or a computer function, and by a first force (F1) that is affected by the flow of working medium between the first (19a) and second (19b) chambers and is determined by pressure acting upon areas (If, 1g) of the valve piston (1) arranged in a fourth partial space (f) inside a pilot housing (30) arranged in association with the housing (29), **characterized in that** the extension part (1a) and the second piston (1b) are arranged in the fourth partial space (f), on the high pressure side, that is upstream, of the valve piston (1), with the second piston (1b) dividing a cylinder (1d) arranged in association with the pilot housing (30) into a damping pressure chamber (e) separated from the fourth partial space (f), where changes in pressure in the damping pressure chamber (e) caused by the movement of the valve slide or increases/reductions in pressure across the valve slide create a damping force irrespective of the volume of gas in the damper, as the said damping force is a part of the first force F1 that always acts against the direction of movement and damps the movements of the valve piston (1).

9. The device as claimed in claim 8, **characterized in that** the guide face (1e) of the damping device (1a, 1b, 1d) is arranged with a clearance (s2) to the cylinder (1d) which is provided with openings (1e) arranged in association with the pilot housing (30).

10. The device as claimed in claim 9, **characterized in that** the size of the clearance (s2) in relation to the diameter of the second piston (1b) is selected to be such that, in the event of an urged movement of the valve slide from the stationary control position, the pressure in the damping chamber (e) undergoes a change in value that is essentially proportional to the speed of movement of the valve slide, for example, the ratio between the size of the clearance (s2) and the diameter of the second piston (**1**b) is between 0.010 and 0.018.

11. The device as claimed in claim 9 or 10, **characterized in that** the second piston (1b) is located in such a way in relation to the openings (1e) that, in a first functional state, when the actuator (7) or the computer arrangement is activated, the second piston (1b) is positioned so that it is inserted in the cylinder (1d) with an overlap (ol) in relation to the openings (1e) that is such that the movements of the second piston (1b) are damped only in this functional state and **in that**, in a second functional state with an inactivated or defective system, the spring (6) moves the
valve slide towards its opposite end position defined by a surface (a) in such a way that the overlap (ol) of the second piston (1b) in relation to the openings (1e) has a value or has changed to an underlap (ul) or a smaller overlap (ol) of such a size that the damping is inactive or greatly reduced, in order to make possible rapid changes or transitions between the two functional states.

12. The device as claimed in any one of claims 8-11, **characterized in that** the control signals to the controllable actuator (7) or the computer are in response to sensors (23) arranged to detect and indicate movements of the wheel, runner, track, etc, in relation to the chassis of the vehicle.

13. The device as claimed in any one of claims 8-12, **characterized in that** the valve piston (1) can move in a radial direction in relation to the pilot housing (30) and where the axial position of the valve piston (1) is determined by the actuator (7) or the computer function and by spring devices (33, 6).

14. The device as claimed in claim 13, **characterized in that** when a second functional state, that is an inactivated or defective state, arises, the second piston (2) covers a duct (11) and limits a first flow (q11) of working medium between the first (19a) and second (19b) chamber, so that a non-return element (12) connected to a duct (17) is opened by the difference in pressure that arises and the main flow (q11) of the working medium through the duct (11) is divided into flows (q12 and q22).

15. The device as claimed in claim 14, **characterized in that** a displacement of the first piston (2) results in the main flow (q11) in the duct (il) gradually becoming a final flow (q12) that flows in parallel with the flow (q22) in the duct (17) so that no transients arise.

16. A method for eliminating disturbances caused by the admixture of gas in a damping medium in a partial step valve or pilot valve arranged in a vehicle, where the valve comprises a valve slide that can move in a space (b, c, t) in the medium, arranged in ducts (K1, K2) between a first (19a) and a second (19b) chamber filled with damping medium and that is composed of at least a valve piston **(1)** and a second piston (1b), **characterized in that**, in a first activated functional state, the second piston (**1**b) arranged on the high pressure side or upstream of the valve piston (1) is inserted into a space in a cylinder (1d) and divides this cylinder (1d) into an additional damping chamber (e) while, at the same time, it brings about a change in pressure in the additional damping chamber (e) and, in a second functional state, called the inactivated or defective state, damping medium flows relatively freely or completely freely over the second piston (**1**b) and equalizes the pressure across the piston (1b).

17. The method as claimed in claim 16 **characterized in that** when the flow of working medium over the second piston (1b) is affected, an additional damping force is achieved applied on the slide, which coincides with a first force (F1) determined by pressure acting on areas (If, 1g) of the valve piston (1) arranged on the valve slide, where the first force (F1) opposes a second force (F2) which is completely or partially initiated by an external controllable actuator (7) or a computer function.

18. The method as claimed in claim 16 or 17 **characterized in that** the second piston (1b) is arranged on an extension part (1a) and these operate in a fourth partial space (t) on the high pressure side, that is upstream, of the valve piston (1) so that the second piston (1b) divides the cylinder (1d) into the damping chamber (e), that is thus separated from the fourth partial space (t).

19. The method as claimed in claim 18 **characterized in that**, in its first functional state, the second piston (1b) is arranged in the cylinder (1d) with a clearance (s2) and an overlap (ol), so that when the valve slide is in a stationary control position, the damping medium flows via the overlap (ol) through this clearance (s2) which results in the pressure in the damping chamber (e) assuming a value that essentially corresponds to a pressure value in the fourth partial space (f) and, in the event of an urged movement of the valve slide from the stationary control position, the pressure in the damping chamber (e) undergoes a change in value that is essentially proportional to the speed of movement of the valve slide or the level of
increase/reduction in pressure, which generates the damping force coinciding with the first force (F1) that counteracts the movement of the valve slide and thereby brings about the disturbance elimination.

## Patentansprüche

1. Anordnung zum Beseitigen von Störungen für Stoßdämpfer für Fahrzeuge, wobei die Stoßdämpfer elektronisch gesteuert werden, zum Beispiel durch einen Computer gesteuert werden oder EC-gesteuert werden, mit einem Steuergerät (24), das Bewegungserfassungssensoren umfasst und in Reaktion auf diese Steuersignale (il) zu einem oder mehreren Stoßdämpfern auslöst, wobei jeder Stoßdämpfer einen Zylinder (19) und einen Kolben (20), der ausgelegt ist, dass er in einem Medium (31) arbeitet, welches von dem Stoßdämpfer verwendet wird, und dass er die innere Kammer des Zylinders in ein erstes und ein zweites Kammerabteil (19a, 19b) unterteilt, umfasst, wobei die Anordnung ein oder mehrere Ventile (26b) in der Form von Vorsteuerventilen oder Teilschrittventilen umfasst, die den Druck des Mediums in den Kammerabteilen und somit die durch den Stoßdämpfer ausgeführte Dämpfung, zum Beispiel in beide Richtungen, mittels der Steuersignale steuern, wobei jedes Ventil mindestens eine elektrische Spule (25), die mit den Steuersignalen verbunden ist oder verbunden werden kann, und ein Bauteil umfasst, welches durch die Spule gesteuert wird, wenn Steuersignale empfangen werden, wobei das Bauteil sich bewegen (4) kann und vorzugsweise mit kurzen Hüben arbeitet und das wiederum durch seine Bewegungen Einfluss auf einen ersten Kolben (2) hat, der sich in einem ersten Raum in einem Ventilgehäuse, gegen die Wirkung einer Feder (6), bewegt, wobei der erste Kolben (2) den ersten Raum in einen ersten und einen zweiten Teilraum (c, b) unterteilt und in einem ersten Betriebszustand in Längsrichtung verschobene Positionen einnimmt, die einen ersten Mediumsstrom (q11) dazu veranlassen, von dem ersten Kammerabteil des Stoßdämpfers über den Teilraum (c) unter dem ersten Kolben (2) und weiter durch eine erste Seitenöffnung (11, 13), die in der Innenwand (3) des Gehäuses angeordnet ist, zu einem ersten Kanal (11) hin, der mit dem zweiten Kammerabteil verbunden ist, zu strömen, und in einem zweiten Betriebszustand eine in Längsrichtung verschobene Position einnimmt, in der ein zweiter Mediumsstrom (q22), der nicht von dem ersten Kolben beeinflusst wird, von dem ersten Teilraum (c) zu einer zweiten Seitenöffnung (16), die in dem Gehäuse (29) angeordnet ist und die vorzugsweise der ersten Seitenöffnung (13) in dem Gehäuse entgegengesetzt ist, und weiter zu dem zweiten Kammerabteil (19b) über einen zweiten Kanal (17) und ein Rückschlagelement (12), das darin angeordnet ist, strömt, zusätzlich dazu, wenn der zweite Betriebszustand eingenommen wird, ist der erste Kolben angeordnet, um veranlasst zu werden, sich durch Führungsflächen (10), die an dem ersten Kolben (2) und der Innenwand (3) in dem Gehäuse, die diesen entsprechen, angeordnet sind, zu einer Position vor der ersten Seitenöffnung (13) zu bewegen, wo der erste Mediumsstrom (q11) reduziert ist und der zweite Mediumsstrom (q22) aufgrund einer Druckerhöhung in den Teilräumen (c, b), die durch eine Reduzierung des ersten Mediumsstroms und somit der Öffnung des Elements (12) verursacht wird, ausgelöst wird, und wo der erste Kolben die Position vor der ersten Seitenöffnung mittels der Feder einnimmt und eine Druckreduzierung an der ersten Seitenöffnung, die durch den Kolben verursacht wird, die Position entlang der ersten Seitenöffnung einnimmt, und der erste Kolben (2) ist mit Durchgängen (9) zwischen den Teilräumen (c, b) ausgelegt und dadurch findet eine axiale Druckentlastung bei beiden Betriebszuständen statt, wobei der erste Kolben (2) auf einem Ventilschieber (2, 1, 1a, 1b) angeordnet ist, der sich in eine Längsrichtung bewegen kann und der sich in die Teilräume und in einen zweiten Teilraum in dem Gehäuse erstreckt, das mit den Teilräumen (b, c) verbunden ist,
wobei eine Steuerkante (8) für den Ventilschieber (2, 1, 1a, 1b) an dem Übergang zu dem zweiten Teilraum angeordnet ist, dadurch, dass der Ventilschieber (2, 1, 1a, 1b) einen Erstreckungsteil (1a) aufweist, der stromaufwärts der Steuerkante an seinem Teil angeordnet ist, der sich in den zusätzlichen Raum erstreckt, und einen zweiten Kolben (1b) aufweist, der daran angeordnet ist, der den zweiten Teilraum in einen dritten und einen vierten Teilraum (e und f) unterteilt, die den Wirkungsbereich des Schiebers in einen ersten Teilbereich (1g), der der Steuerkante zugeordnet ist, und einen zweiten Teilbereich (1f) an der unteren Oberfläche des zweiten Kolbens unterteilen, und dadurch, dass der zweite Kolben mit einer Umfangsführungsfläche (1c) ausgelegt ist, die der Zylinderwand (1d) in dem zweiten über einen Abstand (s2) gegenüberliegt, und dadurch, dass dieser Abstand ausgelegt ist, das Beseitigen von Störungen zu bewirken, indem Änderungen des Drucks, der in dem Teilraum (e), der dem zweiten Kolben zugeordnet ist, als ein Ergebnis der Bewegungsgeschwindigkeit auftritt, oder eine Erhöhung/Reduzierung des Drucks auf/über dem Schieber mittels des zweiten Teilbereichs (1f) des Wirkungsbereichs des Schiebers veranlasst werden, was die Kraft (F1) in einer Richtung, die der Bewegung entgegenwirkt, beeinflusst.

2. Anordnung nach Anspruch 1, **dadurch gekennzeichnet, dass** der Schieber angeordnet ist, um Verschiebungsbewegungen im Wesentlichen in Längsrichtung und kleine radiale Abstände (s1 und s2) von vorzugsweise der im Wesentlichen gleichen Größe auszuführen.

3. Anordnung nach Anspruch 1 oder 2, **dadurch gekennzeichnet, dass** die Kraft eine Dämpfungswirkung veranlasst und jegliche Beimischung von Gas in dem Medium im Wesentlichen daran hindert, das Dämpfen zu beeinflussen.

4. Anordnung nach Anspruch 1, 2 oder 3, **dadurch gekennzeichnet, dass** eine Reduzierung von Geräuschen von den Stoßdämpfern aufgrund der Tatsache, dass jegliche Beimischung von Gas in dem Medium daran gehindert wird, das Dämpfen zu beeinflussen, vorhanden ist.

5. Anordnung nach einem der Ansprüche 1-4, **dadurch gekennzeichnet, dass** der reduzierte zweite Strom (q12) angeordnet ist, um im zweiten Betriebszustand in Löchern (42), Schlitzen oder Durchgängen kalibriert werden zu können.

6. Anordnung nach einem der Ansprüche 1-5, **dadurch gekennzeichnet, dass** das Gehäuse-/Vorsteuerventil (26a, 29, 39, 40) Öffnungen (1e) hat, durch welche der erste und der zweite Strom strömen können, dadurch, dass in dem ersten Betriebszustand der zweite Kolben (1b) derart in Bezug auf die Öffnungen positioniert ist, dass eine Überlappung (ol), die erzeugt wird, genügend groß ist, um eine Dämpfung zu verursachen, während im zweiten Betriebszustand die Überlappung einen Wert hat oder sich zu einer Lücke (ul) oder einer kleinere Überlappung (ol) von derartiger Größe geändert hat, dass die Dämpfung nicht aktiv ist oder stark reduziert ist, um schnelle Änderungen oder Übergänge zwischen den zwei Betriebszuständen zu ermöglichen.

7. Anordnung nach einem der Ansprüche 1-6, **dadurch gekennzeichnet, dass** sie ein Vorsteuerventil (30, 39) umfasst, das in einem Hauptventil integriert ist, was bedeutet, dass ein großer Teil seiner Funktion (30) in der Konstruktion des Hauptventils stattfindet, zum Beispiel innerhalb seiner Hauptfeder (33), wodurch eine kompakte Ausgestaltung erzielt wird.

8. Vorrichtung für einen Stoßdämpfer für Fahrzeuge, wobei der Stoßdämpfer eine Kolbenvorrichtung (20), rotierende Flügelvorrichtung, umfasst, die sich in einem Zylinder (19) oder in einem Gehäuse bewegen kann, wobei die Kolbenvorrichtung (20), rotierende Flügelvorrichtung, den Innenraum in dem Zylinder, Gehäuse, in eine erste und eine zweite Kammer (19a, 19b) unterteilt, die durch einen oder mehrere Kanäle (K1, K2) miteinander verbunden sind, wobei die Vorrichtung ein Ventil zur Beseitigung von Störungen (26b) in der Form eines Teilschrittventils oder eines Vorsteuerventils umfasst, das in den Kanälen (K1, K2) angeordnet ist, wobei das Ventil (26) einen Ventilschieber umfasst, der aus einem Ventilkolben (1), einem Erstreckungsteil (1a), einem zweiten Kolben (1b) und einem ersten Kolben (2) besteht, wobei der erste Kolben (2) auf dem Ventilkolben (1) angeordnet ist und sich in dem ersten und dem zweiten Teilraum (c, b), die in dem Gehäuse (29) des Ventils angeordnet sind, bewegen kann, wobei die Verschiebungsbewegungen des ersten Kolbens (2) durch eine zweite Kraft (F2), die vollständig oder teilweise durch ein externes steuerbares Stellglied (7) oder eine Computerfunktion ausgelöst werden kann, und durch eine erste Kraft (F1), die durch den Strom des Arbeitsmediums zwischen der ersten (19a) und der zweiten (19b) Kammer beeinflusst und durch Druck, der auf Bereiche (1f, 1g) des Ventilkolbens (1), der in einem vierten Teilraum (f) innerhalb eines Vorsteuergehäuses (30), das dem Gehäuse (29) zugeordnet ausgelegt ist, angeordnet ist, wirkt, festgelegt wird, festgelegt werden können, **dadurch gekennzeichnet, dass** der Erstreckungsteil (1a) und der zweite Kolben (1b) in dem vierten Teilbereich (f) auf der Hochdruckseite angeordnet sind, welche stromaufwärts des Ventilkolbens (1) liegt, wobei der zweite Kolben (1b) einen Zylinder (1d) unterteilt, der in Verbindung mit dem Vorsteuergehäuse (30) in einer Dämpfungsdruckkammer (e), die von dem vierten Teilraum (f) getrennt ist, angeordnet ist, wobei Änderungen des Drucks in der Dämpfungsdruckkammer (e), die durch die Bewegung des Ventilschiebers verursacht werden, oder Erhöhungen/Reduzierungen des Drucks über den Ventilschieber eine Dämpfungskraft ungeachtet des Volumens des Gases in dem Stoßdämpfer erzeugen, da die Dämpfungskraft ein Teil der ersten Kraft F1 ist, die immer gegen die Bewegungsrichtung wirkt und die Bewegungen des Ventilkolbens (1) dämpft.

9. Vorrichtung nach Anspruch 8, **dadurch gekennzeichnet, dass** die Führungsfläche (1e) der Dämpfvorrichtung (1a, 1b, 1d) mit einem Abstand (s2) zu dem Zylinder (1d), der mit Öffnungen (1e), die in Verbindung mit dem Vorsteuergehäuse (30) angeordnet sind, versehen ist, angeordnet ist.

10. Vorrichtung nach Anspruch 9, **dadurch gekennzeichnet, dass** die Größe des Abstands (s2) in Bezug zu dem Durchmesser des zweiten Kolbens (1b) derart ausgewählt ist, dass im Fall einer forcierten Bewegung des Ventilschiebers aus der stationären Steuerposition der Druck in der Dämpfungskammer (e) eine Wertänderung erfährt, die im Wesentlichen proportional zur Bewegungsgeschwindigkeit des Ventilschiebers ist, zum Beispiel das Verhältnis zwischen der Größe des Abstands (s2) und dem Durchmesser des zweiten Kolbens (1b) zwischen 0,010 und 0,018 beträgt.

11. Vorrichtung nach Anspruch 9 oder 10, **dadurch gekennzeichnet, dass** der zweite Kolben (1b) derart in Bezug zu den Öffnungen (1e) angeordnet ist, dass in einem ersten Betriebszustand, wenn das Stellglied (7) oder die Computeranordnung aktiviert ist, der zweite Kolben (1b) so positioniert ist, dass er in den Zylinder (1d) mit einer Überlappung (ol) in Bezug zu den Öffnungen (1e) eingeführt ist, die derart ist, dass die Bewegungen des zweiten Kolbens (1b) nur in diesem Betriebszustand gedämpft werden, und dadurch, dass in einem zweiten Betriebszustand bei einem nicht aktivierten oder defekten System die Feder (6) den Ventilschieber zu der entgegengesetzten Endposition bewegt, die durch eine Oberfläche (a) derart definiert wird, dass die Überlappung (ol) des zweiten Kolbens (1b) in Bezug zu den Öffnungen (1e) einen Wert hat oder sich zu einer Lücke (ul) oder einer kleineren Überlappung (ol) von einer derartigen Größe geändert hat, dass die Dämpfung nicht aktiv ist oder stark reduziert ist, um schnelle Änderungen bei Übergängen zwischen den zwei Betriebszuständen zu ermöglichen.

12. Vorrichtung nach einem der Ansprüche 8-11, **dadurch gekennzeichnet, dass** die Steuersignale an das steuerbare Stellglied (7) oder den Computer in Reaktion auf Sensoren (23), die angeordnet sind, um Bewegungen des Rads, Laufrads, der Spur usw. in Bezug zu dem Fahrwerk des Fahrzeugs zu erfassen und anzuzeigen, ausgeführt werden.

13. Vorrichtung nach einem der Ansprüche 8-12, **dadurch gekennzeichnet, dass** der Ventilkolben (1) sich in eine radiale Richtung in Bezug zu dem Vorsteuergehäuse (30) bewegen kann und wobei die axiale Position des Ventilkolbens (1) durch das Stellglied (7) oder die Computerfunktion und durch Federvorrichtungen (33, 6) festgelegt wird.

14. Vorrichtung nach Anspruch 13, **dadurch gekennzeichnet, dass**, wenn ein zweiter Betriebszustand, der ein nicht aktivierter oder defekter Zustand ist, auftritt, der zweite Kolben (2) einen Kanal (11) abdeckt und einen ersten Strom (q11) von Arbeitsmedium zwischen der ersten (19a) und der zweiten (19b) Kammer eingrenzt, so dass ein Rückschlagelement (12), das mit einem Kanal (17) verbunden ist, durch den auftretenden Druckunterschied geöffnet wird und der Hauptstrom (q11) des Arbeitsmediums durch den Kanal (11) in Ströme (q12 und q22) unterteilt wird.

15. Vorrichtung nach Anspruch 14, **dadurch gekennzeichnet, dass** eine Verschiebung des ersten Kolbens (2) dazu führt, dass der Hauptstrom (q11) in dem Kanal (i1) nach und nach zu einem Endstrom (q12) wird, der parallel zu dem Strom (q22) in dem Kanal (17) fließt, so dass keine Schwankungen auftreten.

16. Verfahren zum Beseitigen von Störungen, die durch Beimischung von Gas in einem Dämpfungsmedium in einem Teilschrittventil oder einem Vorsteuerventil, das in einem Fahrzeug angeordnet ist, verursacht werden, wobei das Ventil einen Ventilschieber umfasst, der sich in einem Raum (b, c, t) in dem Medium bewegen kann und in Kanälen (K1, K2) zwischen einer ersten (19a) und einer zweiten (19b) Kammer, die mit Dämpfungsmedium gefüllt sind, angeordnet ist und der aus mindestens einem Ventilkolben (1) und einem zweiten Kolben (1b) zusammengesetzt ist, **dadurch gekennzeichnet, dass** in einem ersten aktivierten Betriebszustand der zweite Kolben (1b), der an der Hochdruckseite oder stromaufwärts des Ventilkolbens (1) angeordnet ist, in einen Raum in einem Zylinder (1d) eingeführt ist und diesen Zylinder (1d) in eine zusätzliche Dämpfungskammer (e) unterteilt, während er zur gleichen Zeit eine Druckveränderung in der zusätzlichen Dämpfungskammer (e) verursacht, und in einem zweiten Betriebszustand, der der nicht aktivierte oder defekte Zustand genannt wird, das Dämpfungsmedium relativ frei oder vollständig frei über den zweiten Kolben (1b) fließt und den Druck auf den Kolben (1b) ausgleicht.

17. Verfahren nach Anspruch 16, **dadurch gekennzeichnet, dass**, wenn der Strom von Arbeitsmedium über den zweiten Kolben (1b) auftritt, eine zusätzliche Dämpfungskraft erzielt und auf den Schieber aufgebracht wird, die mit einer ersten Kraft (F1), die durch Druck, der auf Bereiche (1f, 1g) des auf dem Ventilschieber angeordneten Ventilkolbens (1) wirkt, festgelegt wird, zusammenfällt, wobei die erste Kraft (F1) einer zweiten Kraft (F2) entgegenwirkt, die durch ein externes steuerbares Stellglied (7) oder eine Computerfunktion vollständig oder teilweise ausgelöst wird.

18. Verfahren nach Anspruch 16 oder 17, **dadurch gekennzeichnet, dass** der zweite Kolben (1b) an einem Erstreckungsteil (1a) angeordnet ist und diese in einem vierten Teilraum (t) auf der Hochdruckseite, die stromaufwärts des Ventilkolbens (1) ist, arbeiten, so dass der zweite Kolben (1b) den Zylinder (1d) in die Dämpfungskammer (e) unterteilt, die dadurch von dem vierten Teilraum (t) getrennt ist.

19. Verfahren nach Anspruch 18, **dadurch gekennzeichnet, dass** der zweite Kolben (1b) in seinem ersten Betriebszustand in dem Zylinder (1d) mit einem Abstand (s2) und einer Überlappung (ol) angeordnet ist, so dass, wenn der Ventilschieber sich in einer stationären Steuerposition befindet, das Dämpfungsmedium über die Überlappung (ol) durch diesen Abstand (s2) fließt, was dazu führt, dass der Druck in der Dämpfungskammer (e) einen Wert annimmt, der im Wesentlichen einem Druckwert in dem vierten Teilraum (f) entspricht, und in dem Fall einer forcierten Bewegung des Ventilschiebers aus der stationären Steuerposition der Druck in der Dämpfungskammer (e) eine Änderung des Werts erfährt, die im Wesentlichen proportional zu der Bewegungsgeschwindigkeit des Ventilschiebers oder dem Grad der Erhöhung/Reduzierung des Drucks ist, der die Dämpfungskraft erzeugt, die mit der ersten Kraft (F1), die der Bewegung des Ventilschiebers entgegenwirkt und somit die Beseitigung der Störungen verursacht, zusammenfällt.

## Revendications

1. Agencement avec élimination de perturbations pour amortisseurs pour véhicules, lesquels amortisseurs sont commandés électroniquement, par exemple commandés par ordinateur ou commandés par CE, avec un équipement de commande (24) qui comprend des capteurs de détection de mouvement et, en réponse à ceux-ci, initie des signaux de commande (il) à l'attention d'un ou plusieurs amortisseurs, chaque amortisseur comprenant un cylindre (19) et un piston (20) disposé dans celui-ci qui travaille dans un fluide (31) utilisé par l'amortisseur et qui divise la chambre interne du cylindre en un premier et deuxième compartiment de chambre (19a, 19b), lequel agencement comprend une ou plusieurs soupapes (26b) sous la forme de soupapes pilote ou soupapes étagées partielles qui contrôlent la pression du fluide dans les compartiments de chambre et donc l'amortissement réalisé par l'amortisseur, par exemple dans les deux directions, au moyen desdits signaux de commande, avec chaque soupape comprenant au moins une bobine électrique (25) raccordée, ou pouvant être raccordée, aux signaux de commande, et une partie commandée par la bobine lorsque les signaux de commande sont reçus, laquelle partie peut se mouvoir (4) et travaille de préférence avec de brèves courses et laquelle, à son tour, au moyen de ses mouvements, affecte un premier piston (2) qui se déplace dans un premier espace dans un logement de soupape à l'encontre de l'action d'un ressort (6), lequel premier piston (2) divise le premier espace en des premier et deuxième espaces partiels (c, b) et, dans un premier état fonctionnel, adopte des positions déplacées longitudinalement faisant en sorte qu'un premier écoulement de fluide (q11) passe du premier compartiment de chambre, via l'espace partiel (c) sous le premier piston (2) et à travers une première ouverture latérale (11, 13) disposée dans la paroi intérieure (3) du logement, jusqu'à un premier conduit (11) raccordé au deuxième compartiment de chambre et, dans un deuxième état fonctionnel, adopte une position déplacée longitudinalement où un deuxième écoulement de fluide (q22) non affecté par le premier piston passe du premier espace partiel (c) vers une deuxième ouverture latérale (16), laquelle est disposée dans le logement (29) et est de préférence opposée à la première ouverture latérale (13) dans le logement, et jusqu'au deuxième compartiment de chambre (19) via un deuxième conduit (17) et un élément de non-retour (12) disposé dans celui-ci, en plus de quoi, lorsque le deuxième état fonctionnel est adopté, le premier piston est disposé de manière à être mis en mouvement, au moyen de faces de guidage (10) disposées sur le premier piston (2) et la paroi intérieure (3) dans le logement correspondant à celles-ci, vers une position devant la première ouverture latérale (13) où le premier écoulement de fluide (q11) est réduit et le deuxième écoulement de fluide (q22) est initié du fait d'une augmentation de pression dans lesdits espaces partiels (c, b) causée par une réduction du premier écoulement de fluide et donc l'ouverture de l'élément (12), et où le premier piston adopte la position devant la première ouverture latérale au moyen dudit ressort et d'une réduction de pression à la première ouverture latérale causée par le piston adoptant la position le long de la première ouverture latérale, et le premier piston (2) est étudié avec des passages (9) entre les espaces partiels (c, b), et il y a de la sorte une limitation de pression axiale dans les deux dits états fonctionnels,
dans lequel le premier piston (2) est situé sur une coulisse de soupape (2, 1, 1a, 1b) qui peut se déplacer dans une direction longitudinale et qui s'étend dans lesdits espaces partiels et dans un deuxième espace partiel dans le logement qui est raccordé auxdits espaces partiels (b, c),
dans lequel une arête de commande (8) pour la coulisse de soupape (2, 1, 1a, 1b) est située au niveau de la transition vers le deuxième espace partiel, la coulisse de soupape (2, 1, 1a, 1b) ayant une partie d'extension (1a) située en amont de l'arête de commande sur sa partie qui s'étend à l'intérieur de l'espace supplémentaire et ayant un deuxième piston (1b) disposé sur celle-ci qui divise le deuxième espace partiel en des troisième et quatrième espaces partiels (e et f) qui divisent la zone d'action de la coulisse en une première zone partielle (1g) en association avec ladite arête de commande et une deuxième zone partielle (1f) sur la surface de dessous du deuxième piston, et le deuxième piston étant conçu avec une face de guidage périphérique (1c) opposée à la paroi de cylindre (1d) dans le deuxième via un espacement (s2), et cet espacement étant étudié pour réaliser l'élimination des perturbations en provoquant des changements de la pression qui apparaît dans l'espace partiel (c) en association avec le deuxième piston en tant que résultat de la rapidité de mouvement ou de l'augmentation/réduction de pression sur/par-dessus la coulisse au moyen de la deuxième zone partielle (1f) de la zone d'action de la coulisse affectant la force (F1) dans une direction qui agit à l'encontre du mouvement.

2. Agencement tel que revendiqué par la revendication 1, **caractérisé en ce que** la coulisse est étudiée pour réaliser des mouvements de déplacement sensiblement longitudinaux et de petits espacements radiaux (s1 et s2) de préférence sensiblement de la même taille.

3. Agencement tel que revendiqué par la revendication 1 ou 2, **caractérisé en ce que** ladite force provoque une fonction d'amortissement et empêche sensiblement qu'un quelconque ajout par mélange de gaz dans le fluide affecte l'amortissement.

4. Agencement tel que revendiqué par la revendication 1, 2 ou 3, **caractérisé en ce qu'**il y a une réduction de bruit des absorbeurs de chocs due au fait que l'on empêche qu'un quelconque ajout par mélange de gaz dans le fluide affecte l'amortissement.

5. Agencement tel que revendiqué par l'une quelconque des revendications 1-4, **caractérisé en ce que** le deuxième écoulement réduit (q12) est étudié pour pouvoir être calibré, dans le deuxième état fonctionnel, dans des trous (42), fentes, ou passages.

6. Agencement tel que revendiqué par l'une quelconque des revendications 1-5, **caractérisé en ce que** le logement/la soupape pilote (26a, 29, 39, 40) a des ouvertures (1e) via lesquelles les premier et deuxième écoulements peuvent passer, que, dans le premier état fonctionnel, le deuxième piston (1b) est positionné de telle manière par rapport aux ouvertures qu'un recouvrement positif (ol) créé est suffisamment grand pour provoquer un amortissement alors que, dans le deuxième état fonctionnel, le recouvrement positif a une valeur, ou a changé en un recouvrement négatif (ul) ou un recouvrement positif plus petit (ol) d'une taille telle, que l'amortissement est inactif ou est grandement réduit afin de rendre possible de rapides changements ou transitions entre les deux états fonctionnels.

7. Agencement tel que revendiqué par l'une quelconque des revendications 1-6, **caractérisé en ce qu'**il comprend une soupape pilote (30, 39) intégrée dans une soupape principale, ce qui signifie qu'une grande partie de sa fonction (30) a lieu à l'intérieur de la construction de la soupape principale, par exemple à l'intérieur de son ressort principal (33), moyennant quoi un design compact est obtenu.

8. Dispositif pour un amortisseur pour véhicules où l'amortisseur a un dispositif de piston (20), un dispositif de lame rotative, qui peut bouger dans un cylindre (19) ou dans un logement, lequel dispositif de piston (20), dispositif de lame rotative, divise l'espace intérieur dans le cylindre, le logement, en des première et deuxième chambres (19a, 19b) interconnectées par un ou plusieurs conduits (K1, K2) avec le dispositif comprenant une soupape d'élimination de perturbations (26b) sous la forme d'une soupape étagée partielle ou soupape pilote, disposée dans les conduits (K1, K2), où la soupape (26b) comprend une coulisse de soupape consistant en un piston de soupape (1), une partie d'extension (1a), un deuxième piston (1b) et un premier piston (2), avec le premier piston (2) disposé sur le piston de soupape (1) et capable de se mouvoir dans des premier et deuxième espaces partiels (c, b) disposés dans le logement (29) de la soupape, avec les mouvements de déplacement du premier piston (2) pouvant être déterminés par une deuxième force (F2) pouvant être initiée complètement ou partiellement par un actionneur à commande externe (7) ou une fonction d'ordinateur et par une première force (F1) affectée par l'écoulement d'un fluide de travail entre les première (19a) et deuxième (19b) chambres et qui est déterminée par une pression s'exerçant sur des zones (1f, 1g) du piston de soupape (1) disposé dans un quatrième espace partiel (f) à l'intérieur d'un logement de pilote (30) disposé en association avec le logement (29),
**caractérisé en ce que** la partie d'extension (1a) et le deuxième piston (1b) sont disposés dans le quatrième espace partiel (f), du côté de la pression élevée, qui est en amont, du piston de soupape (1) avec le deuxième piston (1b) divisant un cylindre (1d) disposé en association avec le logement pilote (30) dans une chambre de pression d'amortissement (e) séparée du quatrième espace partiel (f), où des changements de pression dans la chambre de pression d'amortissement (e) occasionnés par le mouvement de la coulisse de soupape ou des augmentations/réductions de pression sur la coulisse de soupape créent une force d'amortissement indépendamment du volume de gaz dans l'amortisseur, en tant que ladite force d'amortissement qui fait partie de la première force F1 qui agit toujours à l'encontre de la direction de mouvement et amortit les mouvements du piston de soupape (1).

9. Dispositif tel que revendiqué par la revendication 8, **caractérisé en ce que** la face de guidage (1e) du dispositif d'amortissement (1a, 1b, 1d) est disposée avec un espacement (s2) par rapport au cylindre (1d) qui est doté d'ouvertures (1e) disposées en association avec le logement pilote (30).

10. Dispositif tel que revendiqué par la revendication 9, **caractérisé en ce que** la taille de l'espacement (s2) en rapport avec le diamètre du deuxième piston (1b) est sélectionnée pour être telle, que dans l'éventualité d'un mouvement poussé de la coulisse de soupape à partir de la position de commande stationnaire, la pression dans la chambre d'amortissement (e) est soumise à un changement de valeur qui est sensiblement proportionnel à la rapidité de mouvement de la coulisse de soupape, par exemple, le rapport entre la taille de l'espacement (s2) et le diamètre du deuxième piston (1b) est compris entre 0,010 et 0,018.

11. Dispositif tel que revendiqué par la revendication 9 ou 10, **caractérisé en ce que** le deuxième piston (1b) est situé d'une manière telle en rapport avec les ouvertures (1e) que, dans un premier état fonctionnel, lorsque l'actionneur (7) ou le dispositif informatique est activé, le deuxième piston (1b) est positionné de manière à être inséré dans le cylindre (1d) avec un recouvrement positif (ol) en rapport avec les ouvertures (1e) qui est tel, que les mouvements du deuxième piston (1b) sont amortis seulement dans cet état fonctionnel et **en ce que**, dans un deuxième état fonctionnel avec un système inactivé ou défectueux, le ressort (6) fait bouger la coulisse de soupape vers sa position finale opposée définie par une surface (a) de manière à ce que le recouvrement positif (ol) du deuxième piston (1b) en rapport avec les ouvertures (1e) a une valeur ou a changé en un recouvrement négatif (ul) ou un plus petit recouvrement positif (ol) d'une taille telle, que l'amortissement est inactif ou fortement réduit afin de rendre possibles de rapides changements ou transitions entre les deux états fonctionnels.

12. Dispositif tel que revendiqué par l'une quelconque des revendications 8-11, **caractérisé en ce que** les signaux de commande à l'attention de l'actionneur à commande externe (7) ou l'ordinateur sont en réponse à des capteurs (23) étudiés pour détecter et indiquer des mouvements de la roue, du galet de roulement, du chemin de roulement, etc. en rapport avec le châssis du véhicule.

13. Dispositif tel que revendiqué par l'une quelconque des revendications 8-12, **caractérisé en ce que** le piston de soupape (1) peut se mouvoir dans une direction radiale par rapport au logement de pilote (30) et où la position axiale du piston de soupape (1) est déterminée par l'actionneur (7) ou la fonction d'ordinateur et par des dispositifs de ressort (33, 6).

14. Dispositif tel que revendiqué par la revendication 13, **caractérisé en ce que**, lorsqu'un deuxième état fonctionnel, lequel est un état inactivé ou défectueux, apparaît, le deuxième piston (2) recouvre un conduit (11) et limite un premier écoulement (q11) de fluide de travail entre la première (19a) et la deuxième (19b) chambre, de sorte qu'un élément de non-retour (12) raccordé à un conduit (17) est ouvert par la différence de pression qui apparaît et l'écoulement principal (q11) du fluide de travail à travers le conduit (11) est divisé en écoulements (q12 et q22).

15. Dispositif tel que revendiqué par la revendication 14, **caractérisé en ce qu'**un déplacement du premier piston (2) a pour résultat que l'écoulement principal (q11) dans le conduit (i1) devient progressivement un écoulement final (q12) qui s'écoule en parallèle à l'écoulement (q22) dans le conduit (17) de sorte qu'il n'y a pas d'apparition de transitoires.

16. Procédé pour éliminer des perturbations causées par l'ajout par mélange de gaz dans un fluide d'amortissement dans une soupape étagée partielle ou soupape pilote disposée dans un véhicule, où la soupape comprend une coulisse de soupape qui peut se mouvoir dans un espace (b, c, t) dans le fluide, disposée dans des conduits (K1, K2) entre les première (19a) et deuxième (19b) chambres remplies avec du fluide d'amortissement et qui se compose d'au moins un piston de soupape (1) et un deuxième piston (1b),
**caractérisé en ce que**, dans un premier état fonctionnel activé, le deuxième piston (1b) disposé du côté de haute pression ou en amont du piston de soupape (1) est inséré dans un espace dans un cylindre (1d) et divise ce cylindre (1d) en une chambre d'amortissement supplémentaire (c) alors que, simultanément, il provoque un changement de pression dans la chambre d'amortissement supplémentaire (c) et, dans un deuxième état fonctionnel, appelé l'état inactivé ou défectueux, du fluide d'amortissement s'écoule relativement librement ou complètement librement par-dessus le deuxième piston (1d) et égalise la pression sur le piston (1b).

17. Procédé tel que revendiqué par la revendication 16, **caractérisé en ce que**, lorsque l'écoulement de fluide de travail par-dessus le deuxième piston (1b) est affecté, une force d'amortissement supplémentaire est obtenue appliquée sur la coulisse, laquelle coïncide avec une première force (F1) déterminée par une pression s'exerçant sur des zones (1f, 1g) du piston de soupape (1) disposé sur la coulisse de soupape, où la première force (F1) s'oppose à une deuxième force (F2) qui est complètement ou partiellement initiée par un actionneur à commande externe (7) ou une fonction d'ordinateur.

18. Procédé tel que revendiqué par la revendication 16 ou 17, **caractérisé en ce que** le deuxième piston (1b) est disposé sur une partie d'extension (1a) et que ceux-ci opèrent dans un quatrième espace partiel (t) du côté de haute pression, qui est en amont du piston de soupape (1), de sorte que le deuxième piston (1b) divise le cylindre (1d) en la chambre d'amortissement (e), laquelle est donc séparée du quatrième espace partiel (t).

19. Procédé tel que revendiqué par la revendication 18, **caractérisé en ce que**, dans son premier état fonctionnel, le deuxième piston (1b) est disposé dans le cylindre (1d) avec un espacement (s2) et un recouvrement positif (ol) de sorte que lorsque la coulisse de soupape est dans une position de commande stationnaire, le fluide d'amortissement s'écoule via le recouvrement positif (ol) à travers cet espacement (s2) ce qui a pour résultat que la pression dans la chambre d'amortissement (e) adopte une valeur qui correspond sensiblement à une valeur de pression dans le quatrième espace partiel (f) et, dans l'éventualité d'un mouvement poussé de la coulisse de soupape à partir de la position de commande stationnaire, la pression dans la chambre d'amortissement (e) est soumise à un changement de valeur qui est sensiblement proportionnel à la rapidité de mouvement de la coulisse de soupape ou au niveau d'augmentation/réduction de pression, ce qui génère la force d'amortissement coïncidant avec la première force (F1) qui agit à l'encontre du mouvement de la coulisse de soupape et provoque de la sorte l'élimination de la perturbation.
